# EUROPÄISCHE PATENTSCHRIFT

(11) **EP 0 599 238 B1**
(45) Veröffentlichungstag und Bekanntmachung des Hinweises auf die Patenterteilung: **20.09.1995**
(21) Anmeldenummer: 93118751.2
(22) Anmeldetag: 22.11.1993
(51) Int. Cl.: B61H 13/04, B60T 11/06

(54) **Betätigungseinrichtung für Feststellbremsen von Schienenfahrzeugen**
Actuating device for railway vehicle parking brakes
Dispositif d'actionnement pour frein de stationnement de véhicules ferroviaires

(30) Priorität: 27.11.1992 DE 4240007
(43) Veröffentlichungstag der Anmeldung: 01.06.1994
(73) Patentinhaber: KNORR-BREMSE AG, 80809 München (DE)
(72) Erfinder: Starck, Günter, D-85304 Ilmmünster (DE); Sonder, Egbert, D-32425 Minden (DE)

(56) Entgegenhaltungen:
- DE-A- 2 609 445
- DE-C- 274 009

## Beschreibung

Die Erfindung betrifft eine Betätigungseinrichtung für Feststellbremsen von Schienenfahrzeugen, mit einer vermittels eines Handrades drehbaren, axial unverschieblich gelagerten Gewindespindel, einer mit der Gewindespindel verschraubten, undrehbar, aber axialverschieblich gehalterten Stellmutter, einem die Stellmutter in Verschraubrichtung zum Handrad in einer bestimmten Axiallage abfangenden, festen Anschlag, einem mit der Stellmutter verbundenen, ersten Federteller, einer sich mit ihrem einen Ende auf diesem ersten Federteller abstützenden, vorgespannten Druckfeder, einem auf dem anderen, dem Handrad zugewandten Ende auf der Druckfeder aufliegenden, zweiten Federteller, einem am zweiten Federteller mittig angelenkten, sich zumindest annähernd rechtwinklig zur Achsrichtung der Gewindespindel erstreckenden Ausgleichshebel und mit zwei an die Enden des Ausgleichshebels angekuppelten Bowdenzügen, wobei die Gewindespindel mit der Stellmutter, die Druckfeder und die beiden Federteller zueinander gleichachsig angeordnet sind.

Eine derartige Betätigungseinrichtung ist aus der DE-OS 26 09 445 bekannt. Bei dieser bekannten Anordnung sind die Stellspindel und die Druckfeder mit axialem Abstand zueinander angeordnet, die Stellmutter ist dabei über den zweiten Federteller verschieblich durchgreifende, relativ lange Zuganker mit dem ersten Federteller gekoppelt. Der zweite Federteller trägt seinerseits eine die Druckfeder und den ersten Federteller koaxial durchgreifende Zugstange, welche an ihrem Ende am Ausgleichshebel mittig angelenkt ist. Infolge dieses Aufbaues weist die bekannte Betätigungseinrichtung eine große, axiale Baulänge auf, was in bestimmten Einbaufällen nachteilig sein kann.

Es ist Aufgabe der Erfindung, eine Betätigungseinrichtung der eingangs genannten Art derart auszugestalten, daß sie nur einen kleinen, insbesondere in axialer Richtung der Gewindespindel kurzen Einbauraum benötigt.

Diese Aufgabe wird für eine Betätigungseinrichtung der eingangs genannten Art gemäß der Erfindung dadurch gelöst, daß die Gewindespindel mit der Stellmutter sich radial und axial innerhalb der Druckfeder befinden, daß die Stellmutter unmittelbar mit dem ersten Federteller verbunden ist, daß der zweite Federteller drehbar und axialverschieblich von der Gewindespindel bzw. einen handradseitigen, gewindefreien Wellenabschnitt dieser Gewindespindel durchsetzt ist und daß der Ausgleichshebel höchstens unter Vermittlung eines dem Handrad zugewandt am zweiten Federteller angeordneten Lagerbockes am zweiten Federteller angelenkt ist.

Für eine derartige, nach der Erfindung ausgebildete Betätigungseinrichtung zeigen die Unteransprüche nach der Erfindung weitere, vorteilhafte Ausbildungsmöglichkeiten auf.

In der Zeichnung sind Ausführungsbeispiele für nach der Erfindung ausgebildete Betätigungseinrichtungen schematisch dargestellt, und zwar zeigt
- Fig.1: eine erste Ausführungsform im Lösezustand,
- Fig.2: diese Ausführungsform im vollen Betätigungszustand,
- Fig.3: eine abgeänderte Ausführungsform, teilweise aufgeschnitten und
- Fig.4: einen Radialschnitt durch die Ausführungsform nach Fig.3 im vergrößerten Maßstab.

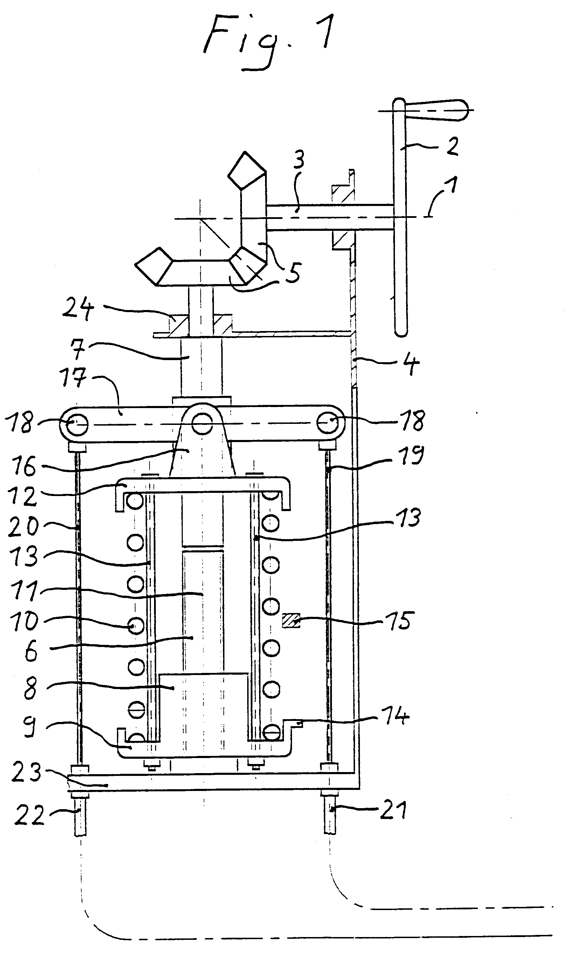

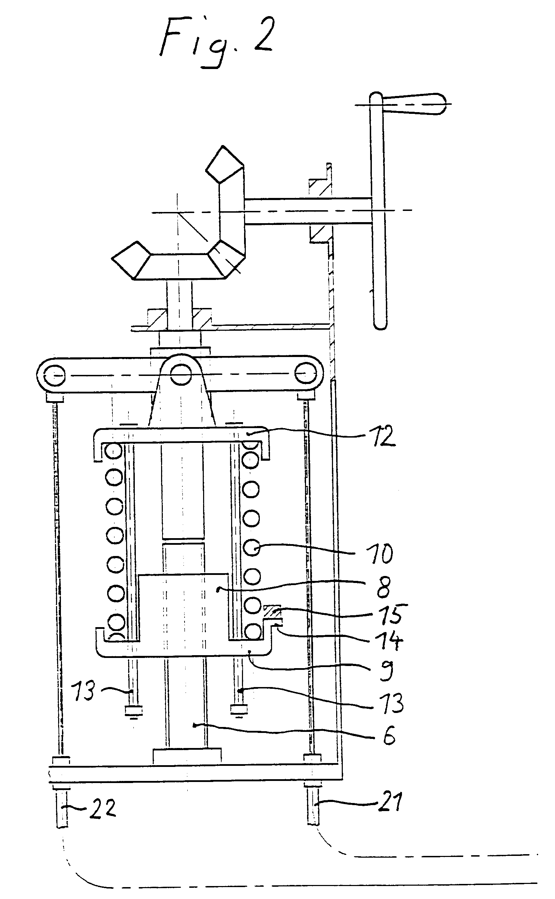

Gemäß Fig.1 und 2 weist die Betätigungseinrichtung ein um eine horizontale Achse 1 drehbares Handrad 2 auf, dessen Welle 3 in einem festen Gestell 4 drehbar gelagert ist. Die Welle 3 ist über ein Kegelradgetriebe 5 mit einer ebenfalls im Gestell 4 drehbar, aber axial unverschieblich gelagerten Gewindespindel 6 drehfest gekoppelt; die Gewindespindel 6 befindet sich unterhalb des Kegelradgetriebes 5 und weist diesem zugewandt einen gewindefreien Wellenabschnitt 7 auf. Die Gewindespindel 6 ist mit einer Stellmutter 8 verschraubt, welche in aus Fig.1 nicht ersichtlicher Weise axialverschieblich, aber undrehbar am Gestell 4 geführt ist. Die Stellmutter 8 ist an ihrem dem Handrad 2 abgewandten Ende zu einem ersten Federteller 9 ausgebildet, auf welchem eine Druckfeder 10 aufliegt. Die axialverschiebliche, undrehbare Führung der Stellmutter 8 kann beispielsweise durch eine am Gestell 4 parallel zur Achsrichtung 11 der Gewindespindel 6 gehalterte, in Fig.1 nicht dargestellte Führungsschiene erfolgen, welche in eine entsprechende Nutausbildung am Außenumfang des Federtellers 9 eingreift. Zwischen dem ersten Federteller 9 und dem Kegelradgetriebe 5 befindet sich ein zweiter Federteller 12, welcher von den Wellenabschnitt 7 der Gewindespindel drehbar und axialverchieblich durchgriffen ist. Die Druckfeder 10 ist zwischen den beiden durch Zuganker 13 gegeneinander abgefangenen Federtellern 9 und 12 mit Vorspannung eingespannt. Die Gewindespindel 6 mit der Stellmutter 8, die beiden Federteller 9 und 12 und die Druckfeder 10 sind gleichachsig angeordnet. Gemäß Fig.1 verlaufen die Zuganker 13 radial innerhalb der Druckfeder 10, es sind zweckmäßig zwei, vorteilhafterweise jedoch drei im gleichmäßigen Winkelabstand zueinander befindliche Zuganker 13 zwischen den beiden Federtellern 9 und 12 vorgesehen.

Die Zuganker 13 sind zweckmäßigerweise beispielsweise durch Ausbildung als Schraubbolzen in ihrer Länge justierbar ausgebildet. Der Fedeteller 9 weist einen radial auskragenden Ansatz 14 auf, welchem gemäß Fig.1 handradseitig mit Abstand ein festes Anschlagteil 15 gegenübersteht. Das Anschlagteil 15 ist in nicht dargestellter Weise am Gestell 4 gehaltert, es bildet zusammen mit dem Ansatz 14 einen Anschlag 14,15. Abweichend zu Fig.2 kann es zweckmäßig sein, mehrere Anschläge 14,15 in gleichmäßigen Winkelabständen um die Achsrichtung 11 verteilt anzuordnen.

Der zweite Federteller 12 trägt handradseitig einen Lagerbock 16, an welchem ein quer zur Achsrichtung 11 verlaufender, zweiarmiger Ausgleichshebel 17 mittig gelagert ist. Gemäß Fig.1 befinden sich der Lagerbock 16 und der Ausgleichshebel 17 vor dem Wellenabschnitt 7, zum Erzielen einer Symmetrie kann es zweckmäßig sein, hinter dem Wellenabschnitt 7 nochmals eine gleichartige Anordnung vorzusehen, wobei die beiden Ausgleichshebel in geeigneter Weise miteinander zu verbinden sind. An den Enden des Ausgleichshebels 17 sind jeweils vermittels Bolzen 18 die Seelen 19 bzw. 20 zweier Bowdenzüge 21 bzw. 22 angelenkt. Die Seelen 19 und 20 verlaufen jeweils parallel zur Achsrichtung 11 seitlich der Druckfeder 10, sie münden in an einem Bodenteil 23 des Gestells 4 gegebenenfalls axial justierbar gehalterte Enden der Bowdenzughüllen ein. Die Bowdenzüge 21 und 22 führen zu zwei Feststellbremsen des Schienenfahrzeuges, wie es aus der bereits erwähnten DE-OS 26 09 445 bekannt ist.

Im vollgelösten Feststellbremsen entsprechenden Zustand nimmt die Betätigungsvorrichtung die aus Fig.1 ersichtliche Lage ein: Die Stellmutter 8 mit dem ersten Federteller 9 befindet sich in ihrer dem Bodenteil 23 unmittelbar benachbarten Endstellung auf der Gewindespindel 6, der Anschlag 14,15 ist weit geöffnet, die Zuganker 13 halten über dem zweiten Federteller 12 die Druckfeder 10 unter einer bestimmten Spannung vorgespannt und der Federteller 12 mitsamt dem Lagerbock 16 und dem Ausgleichshebel 17 befinden sich in einem gewissen Abstand unterhalb einer gestellfesten, kegelradgetriebeseitigen Lagerstelle 24 für den Wellenabschnitt 7. Die Bodenzüge 21 und 22 sind zumindest nahezu entspannt.

Zum Betätigen der Feststellbremsen ist das Handrad 2 derart zu drehen, daß über das Kegelradgetriebe 5 die Gewindespindel 6 in Verschraubrichtung der Stellmutter 8 nach oben gedreht wird. Die drehfest gehaltene Stellmutter 8 bewegt sich daher aufwärts, wobei über den ersten Federteller 9 und die Vorspannung der Druckfeder 10 der zweite Federteller 12 und über den Lagerbock 16 der Ausgleichshebel 17 mitsamt den Seelen 19 und 20 mitgenommen werden, bis die Feststellbremsen über die Bowdenzüge 21 und 22 mit einer der Vorspannung der Druckfeder 10 entsprechenden Kraft zugespannt sind. Der Anschlag 14,15 ist dabei noch um einen bestimmten Hub geöffnet und der zweite Federteller 12 mitsamt seinen mit ihm gekoppelten Teilen befindet sich noch in einem gewissen Abstand vor der Lagerstelle 24. Beim weiteren Drehen des Handrades 2 hebt sich die Stellmutter 8 weiter an, die Druckfeder 10 wird hierbei ohne wesentliche Steigerung der von ihr auf den Federteller 12 nach oben ausgeübten Kraft komprimiert. Der Federteller 12 mitsamt dem Ausgleichshebel 17 erfahren also unter nur unwesentlicher Verstärkung der Zuspannung der Feststellbremsen eine nur geringfügige, weitere Hubbewegung nach oben. Der erste Federteller 9 hebt sich dabei von seinen Abstützungen an den unteren Enden der Zuganker 13 ab, wie es in Fig.2 dargestellt ist. Beim Schließen des Anschlages 14,15, d.h. beim Anlegen des Ansatzes 14 an das Anschlagteil 15, wird dieser Vorgang spätestens beendet, ein Weiterdrehen des Handrades 2 ist ausgeschlossen, da die Stellmutter 8 sich infolge des geschlossenen Anschlages 14,15 nicht weiter auf der Gewindespindel 6 nach oben verschrauben kann. Damit hat die Betätigungsvorrichtung die aus Fig.2 ersichtliche Lage erreicht. Durch Verschleiß, Wärmedehnungen oder dergleichen bedingte Zuspannhub-Änderungen an den Feststellbremsen werden dabei durch entsprechende Hublagenänderungen des zweiten Federtellers 12 ausgeglichen, wobei die Druckfeder 10 die Feststellbremsen mit sich nur unwesentlich ändernder Zuspannkraft geschlossen hält.

Zum Lösen der Feststellbremsen ist das Handrad 2 in umgekehrter Richtung zu drehen, wobei die Betätigungsvorrichtung in die in Fig.1 dargestellte Ausgangslage zurückgeführt wird.

Vermittels Längenänderung der Zuganker 13 ist die Vorspannung der Druckfeder 10 änderbar, die Betätigungsvorrichtung kann so auf unterschiedliche Zuspannkräfte für die Feststellbremsen eingestellt werden. Durch justieren der Bowdenzüge 21 bzw. 22 an den Halterungen ihrer Seelen 19 bzw. 20 am Ausgleichshebel 17 bzw. ihrer Hüllen am Bodenteil 23 kann eine gleichmäßige Zuspannung der beiden Feststellbremsen bei etwa rechtwinklig zur Achsrichtung 11 verlaufendem Ausgleichshebel 17 eingestellt werden; geringe Ungleichförmigkeiten beim Betätigen der beiden Feststellbremsen können durch geringfügiges Neigen des Ausgleichshebels 17 ausgeglichen werden.

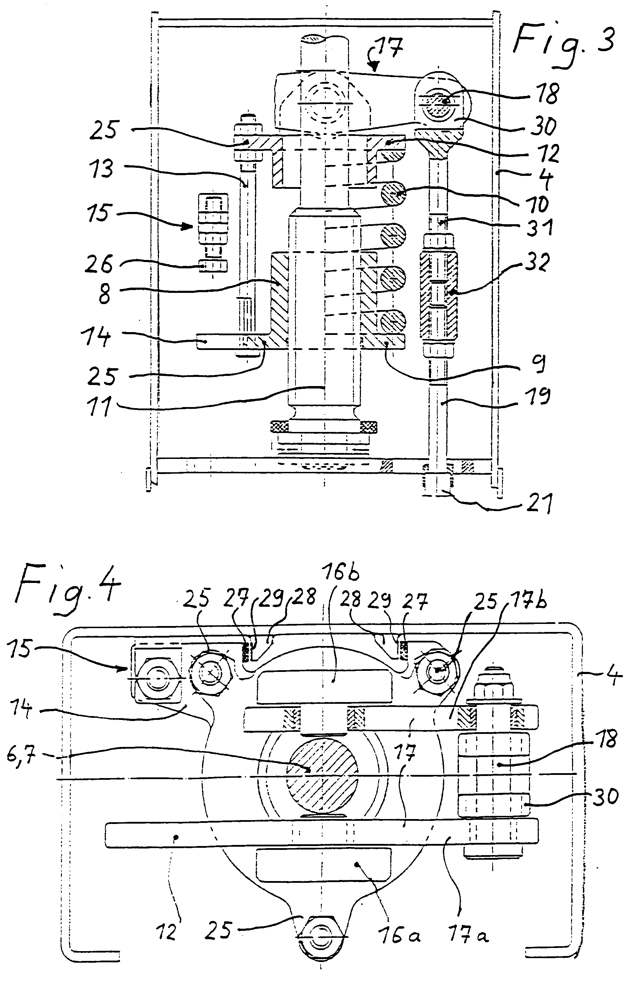

Bei der Betätigungseinrichtung nach den Fig.3 und 4 befinden sich die Zuganker 13 radial außerhalb der Druckfeder 10, welche in Fig.3 nur rechtsseitig der Achsrichtung 11 dargestellt ist. Es sind drei um die Achsrichtung 11 gleichmäßig verteilt angeordnete Zuganker 13 vorgesehen, welche an an den beiden Federtellern 9 und 12 radial nach außen auskragend angeordneten Augen 25 angreifen. Am ersten Federteller 9 ist eines der Augen 25 zum Ansatz 14 erweitert, welchem das am gehäuseartig ausgebildeten Gestell 4 gehalterte Anschlagteil 15 gegenübersteht. Das Anschlagteil 15 weist eine mit einem gestellfesten Gewindeteil verschraubte und durch eine Mutter konterbare Schraube 26 auf, der Öffnungshub des Anschlages 14,15 ist durch justieren der Schraube 26 somit einstellbar.

Aus Fig.4 ist ersichtlich, daß zwei Augen 25 des ersten Federtellers 9 an ihren einander zugewandten Seitenflanken einander zugewandte Führungsflächen 27 aufweisen, wobei diesen Führungsflächen 27 jeweils an einer gestellfesten Führungsschiene 28 angeordnete Führungsflächen 29 gegenüberstehen. Die Führungsflächen 27 und 29 verlaufen parallel zur Achsrichtung 11, die Führungsflächen 29 erstrecken sich vertikal über den ganzen Hubbereich des Federtellers 9. Die Führungsflächen 27 und 29 sichern somit den Federteller 9 gegen Drehungen um die Achsrichtung 11. Für den oberen, zweiten Federteller 12 kann in nicht dargestellter Weise einer der vorbeschriebenen entsprechende, verdrehsichernde Führung vorgesehen werden.

Aus Fig.4 ist ersichtlich, daß der Ausgleichshebel 17 doppelwangig mit zwei Wangen 17a und 17b ausgebildet ist, wobei die beiden Wangen 17a und 17b an jeweils einem Lagerbock 16a bzw. 16b des zweiten Federtellers 12 zu beiden Seiten der Gewindespindel 6 bzw. des Wellenabschnittes 7 drehbar gelagert sind. An den Enden der Wangen 17a, 17b des Ausgleichshebels 17 ist jeweils vermittels des Bolzens 18 ein Zwischenteil 30 gelagert, welches mit einem Gewindeabschnitt 31 endet, der, wie aus Fig.3 ersichtlich, einem Spannschloß 32 zugehört, von welchem andererseits die Seele 19 bzw. 20 der Bowdenzüge 21,22 ausgeht; in Fig.3 und 4 ist nur die rechtsseitige Anordnung dargestellt.

In Fig.3 ist die im übrigen wie zu Fig.1 und 2 beschrieben ausgebildete und funktionierende Betätigungseinrichtung in einer Zwischen-Betätigungsstellung dargestellt, in welcher durch Drehen des Handrades 2 die Stellmutter 8 gerade soweit nach oben verschraubt ist, daß die Druckfeder 10 im wesentlichen allein durch ihre Vorspannung, noch ohne nennenswerte, zusätzliche Kompression, den zweiten Federteller 12 unter Anlegen und Zuspannen der Feststellbremsen angehoben hat; der Anschlag 14,15 weist noch einen bestimmten Öffnungshub auf. Bei einem weiteren Hochschrauben der Stellmutter 8 wird alsbald die Vorspannung der Druckfeder 10 überwunden, bis zum Schließen des Anschlages 14,15 erfährt daher der zweite Federteller 12 infolge Kompression der Druckfeder 10 nur mehr eine geringe Anhebung unter geringfügiger Verstärkung der Zuspannung der Festellbremsen.

In Abänderung zum beschriebenen Ausführungsbeispiel ist es selbstverständlich auch möglich, die Führungsflächen 29 an einer gemeinsamen Führungsschiene anzuordnen bzw. die Verdrehsicherung für die Stellmutter 8 in andersartiger Weise auszubilden. Weiterhin ist noch erwähnenswert, daß das Kegelradgetriebe 5 zwischen dem Handrad 2 und der Gewindespindel 6 bei geeigneter Wahl der Steigung des Gewindes der Gewindespindel 6 mit einer derartigen Obersetzung auslegbar ist, daß bei akzeptablem Kraftaufwand zum Zuspannen der Feststellbremsen die zum Zuspannen bzw. Lösen der Feststellbremsen erforderliche Umdrehungszahl des Handrades 2 nicht zu groß ist.

### Kurzfassung:

Bei einer Betätigungseinrichtung für Festellbremsen von Schienenfahrzeugen ist mittels eines Handrades (2) eine Stellmutter (8) auf einer Gewindespindel (6) verschraubbar. Zwischen zwei Federtellern (9 und 12), deren einer mit der Stellmutter (8) und deren anderer über einen an ihm schwenkbar gelagerten Ausgleichshebel (17) mit zwei Bowdenzügen (21,22) gekoppelt ist, ist eine Druckfeder (10) mit Vorspannung eingespannt. Die beiden Federteller (9 und 12) sind vermittels Zuganker (13) gegeneinander abgefangen. Die Bowdenzüge (21,22) führen zu den Feststellbremsen. Die Gewindespindel (6), die beiden Federteller (9 und 12) sowie die Druckfeder (10) sind gleichachsig zueinander angeordnet, die Druckfeder (10) befindet sich radial außerhalb der Gewindespindel (6).

Durch die radial verschachtelte Anordnung von Gewindespindel (6) und Druckfeder (10) ist ein räumlich gedrängter, axial kurzer Aufbau der Betätigungseinrichtung möglich.

### Bezugszeichenliste

- 1: Achse
- 2: Handrad
- 3: Welle
- 4: Gestell
- 5: Kegelradgetriebe
- 6: Gewindespindel
- 7: Wellenabschnitt
- 8: Stellmutter
- 9: 1. Federteller
- 10: Druckfeder
- 11: Achsrichtung
- 12: 2. Federteller
- 13: Zuganker
- 14: Ansatz
- 15: Anschlagteil
- 14,15: Anschlag
- 16: Lagerbock
- 16a,b: Lagerbock
- 17: Ausgleichshebel
- 17a,b: Wange
- 18: Bolzen
- 19: Seele
- 20: Seele
- 21: Bowdenzug
- 22: Bowdenzug
- 23: Bodenteil
- 24: Lagerstelle
- 25: Auge
- 26: Schraube
- 27: Führungsfläche
- 28: Führungsschiene
- 29: Führungsfläche
- 30: Zwischenteil
- 31: Gewindeabschnitt
- 32: Spannschloß

## Patentansprüche

1. Betätigungseinrichtung für Festellbremsen von Schienenfahrzeugen, mit einer vermittels eines Handrades (2) drehbaren, axial unverschieblich gelagerten Gewindespindel (6), einer mit der Gewindespindel (6) verschraubten, undrehbar, aber axialverschieblich gehalterten Stellmutter (8), einem die Stellmutter (8) in Verschraubrichtung zum Handrad (2) in einer bestimmten Axiallage abfangenden, festen Anschlag (Anschlagteil 15), einem mit der Stellmutter (8) verbundenen, ersten Federteller (9), einer sich mit ihrem einen Ende auf diesem ersten Federteller (9) abstützenden, vorgespannten Druckfeder (10), einem auf dem anderen, dem Handrad (2) zugewandten Ende der Druckfeder (10) aufliegenden, zweiten Federteller (12), einem am zweiten Federteller (12) mittig angelenkten, sich zumindest annähernd rechtwinklig zur Achsrichtung (11) der Gewindespindel (6) erstreckenden Ausgleichshebel (17) und mit zwei an die Enden des Ausgleichshebels (17) angekoppelten Bowdenzügen (21,22), wobei die Gewindespindel (6) mit der Stellmutter (8), die Druckfeder (10) und die beiden Federteller (9,12) zueinander gleichachsig angeordnet sind, dadurch gekennzeichnet, daß die Gewindespindel (6) mit der Stellmutter (8) sich radial und axial innerhalb der Druckfeder (10) befinden, daß die Stellmutter (8) unmittelbar mit dem ersten Federteller (9) verbunden ist, daß der zweite Federteller (12) drehbar und axialverschieblich von der Gewindespindel (6) bzw. einem handradseitigen, gewindefreien Wellenabschnitt (7) dieser Gewindespindel (6) durchsetzt ist, und daß der Ausgleichshebel (17) höchstens unter Vermittlung eines dem Handrad (2) zugewandt am zweiten Federteller (12) angeordneten Lagerbockes (16) am zweiten Federteller (12) angelenkt ist.

2. Betätigungseinrichtung nach Anspruch 1, dadurch gekennzeichnet, daß zumindest der erste Federteller (9) eine verdrehsichernde Längsführung aufweist.

3. Betätigungseinrichtung nach Anspruch 1 oder 2, dadurch gekennzeichnet, daß die beiden Federteller (9,12) durch mehrere, in gleichmäßigen Winkelabständen angeordnete und gegebenenfalls in ihrer Länge einstellbare Zuganker (13) miteinander gekoppelt sind.

4. Betätigungseinrichtung nach Anspruch 3, dadurch gekennzeichnet, daß die Federteller (9,12) nach radialaußen auskragende Augen (25) aufweisen, an welchen die Zuganker (13) gehaltert sind.

5. Betätigungseinrichtung nach den Ansprüchen 2 und 4, dadurch gekennzeichnet, daß an zumindest dem ersten Federteller (9) zwei einander zugewandte Seitenflanken zweier Augen (25) als verdrehsichernde Führungsflächen (27) ausgebildet sind, welchen jeweils eine feste, parallel zur Achsrichtung (11) der Gewindespindel (6) verlaufende Führungsfläche (29) gegenübersteht.

6. Betätigungseinrichtung nach Anspruch 5, dadurch gekennzeichnet, daß die festen Führungsflächen (29) an wenigstens einer an einem Gestell (4) der Betätigungseinrichtung gehalterten Führungsschiene (28) angeordnet sind.

7. Betätigungseinrichtung nach einem oder mehreren der vorstehenden Ansprüche, dadurch gekennzeichnet, daß der Anschlag (14,15) radial außerhalb der Druckfeder (10) axial einstellbar (Schraube 26) angeordnet ist.

8. Betätigungseinrichtung nach einem oder mehreren der vorstehenden Ansprüche, dadurch gekennzeichnet, daß der Ausgleichshebel (17) doppelwangig (Wangen 17a,17b) ausgebildet ist, wobei die Gewindespindel (6) bzw. der gewindefreie Wellenabschnitt (7) den Zwischenraum zwischen den beiden Wangen (17a,17b) des Ausgleichshebels (17) durchgreift.

9. Betätigungseinrichtung nach einem oder mehreren der vorstehenden Ansprüche, dadurch gekennzeichnet, daß an den Enden des Ausgleichshebels (17) jeweils ein Zwischenteil (30) angelenkt ist, das über ein Spannschloß (32) verstellbar mit der Seele (19) eines der Bowdenzüge (21) verbunden ist.

## Claims

1. Actuation device for parking brakes in rail vehicles, having a threaded spindle (6) rotatable by means of a hand wheel (2) and mounted axially non-displaceably, an adjustment nut (8) screwed to the threaded spindle (6) and retained non-rotatably but axially displaceably, a fixed stop (stop part 15) catching the adjustment nut (8) in a specific axial position in the screwing direction of the hand wheel (2), a first spring plate (9) connected to the adjustment nut (8), a loaded compression spring (10) supported with its one end on this first spring plate (9), a second spring plate (12) located at the other end of the compression spring (10) towards the hand wheel (2), a compensation lever (17) hinged in the middle on the second spring plate (12) and extending at least approximately at right angles to the axial direction (11) of the threaded spindle (6), and having two Bowden cables (21, 22) coupled at the ends of the compensation lever (17), the threaded spindle (6) with the adjustment nut (8), the compression spring (10) and the two spring plates (9, 12) being arranged coaxially to each other,
characterised in that the threaded spindle (6) and the adjustment nut (8) are located radially and axially inside the compression spring (10), in that the adjustment nut (8) is directly connected to the first spring plate (9), in that the second spring plate (12) is penetrated rotatably and axially displaceably by the threaded spindle (6) or a thread-free shaft section (7) of this threaded spindle (6) on the hand wheel side, and in that the compensation lever (17) is hinged on the second spring plate (12) with the intermediacy at the most of a bearing block (16) arranged on the second spring plate (12) towards the hand wheel (2).

2. Actuation device according to claim 1, characterised in that at least the first spring plate (9) has a longitudinal guide which secures against rotation.

3. Actuation device according to claim 1 or 2, characterised in that the two spring plates (9, 12) are joined together by several tie rods (13) arranged at uniform angular distances and possibly being adjustable in length.

4. Actuation device according to claim 3, characterised in that the spring plates (9, 12) have radially-outwardly-projecting lugs (25) on which the tie rods (13) are mounted.

5. Actuation device according to claims 2 and 4, characterised in that on at least the first spring plate (9) two side flanks of two lugs (25), facing each other, are constructed as guide surfaces (27) which secure against rotation, opposite each of which there is a respective fixed guide surface (29) extending parallel to the axial direction (11) of the threaded spindle (6).

6. Actuation device according to claim 5, characterised in that the fixed guide surfaces (29) are arranged on at least one guide rail (28) mounted on a frame (4) of the actuation device.

7. Actuation device according to one or more of the preceding claims, characterised in that the stop (14, 15) is arranged axially adjustably (screw 26) radially outside the compression spring (10).

8. Actuation device according to one or more of the preceding claims, characterised in that the compensation lever (17) is constructed with double side walls (side walls 17a, 17b), the threaded spindle (6) or the thread-free shaft section (7) engaging through the intermediate space between the two side walls (17a, 17b) of the compensation lever (17).

9. Actuation device according to one or more of the preceding claims, characterised in that at each end of the compensation lever (17) there is hinged a respective intermediate part (30) which is joined adjustably to the core (19) of one of the Bowden cables (21) by means of a tightener (32).

## Revendications

1. Dispositif d'actionnement pour des freins d'immobilisation de véhicules sur rails, comportant une broche filetée (6) montée axialement non coulissante et pouvant être tournée à l'aide d'un volant à main (2), un écrou de réglage (8) vissé sur la broche filetée (6), arrêté en rotation, mais maintenu axialement coulissant, une butée fixe (pièce de butée 15) qui arrête l'écrou de réglage (8) dans le sens de vissage en direction du volant à main (2), dans une position axiale déterminée, une première coupelle de ressort (9) liée à l'écrou de réglage (8), un ressort de pression (10) sous contrainte initiale, s'appuyant par une de ses extrémités sur cette première coupelle de ressort (9), une seconde coupelle de ressort (12) reposant sur l'autre extrémité du ressort de pression (10) dirigée vers le volant à main (2), un balancier (17) articulé au centre à la seconde coupelle de ressort (12) et s'étendant au moins approximativement de manière perpendiculaire à la direction axiale (11) de la broche filetée (6), et deux câbles sous gaine du type Bowden (21, 22) accouplés aux extrémités du balancier (17), la broche filetée (6) avec l'écrou de réglage (8), le ressort de pression (10) et les deux coupelles de ressort (9, 12) étant tous disposés sur le même axe, les uns par rapport aux autres, caractérisé en ce que la broche filetée (6) avec l'écrou de réglage (8) se trouvent radialement et axialement à l'intérieur du ressort de pression (10), en ce que l'écrou de réglage (8) est lié directement à la première coupelle de ressort (9), en ce que la seconde coupelle de ressort (12) est traversée de manière libre en rotation et de façon axialement coulissante, par la broche filetée (6) ou un tronçon d'arbre non fileté (7) de cette broche filetée (6), situé du côté du volant à main, et en ce que le balancier (17) est articulé à la seconde coupelle (12) tout au plus par l'intermédiaire d'un support de palier (16) agencé sur la seconde coupelle de ressort (12) en étant dirigé vers le volant à main (2).

2. Dispositif d'actionnement selon la revendication 1, caractérisé en ce qu'au moins la première coupelle de ressort (9) présente un guidage longitudinal assurant un arrêt en rotation.

3. Dispositif d'actionnement selon la revendication 1 ou 2, caractérisé en ce que les deux coupelles de ressort (9, 12) sont couplées l'une à l'autre, par plusieurs tirants (13), qui sont agencés selon des intervalles angulaires réguliers et qui, le cas échéant, sont réglables en longueur.

4. Dispositif d'actionnement selon la revendication 3, caractérisé en ce que les coupelles de ressort (9, 12) présentent des yeux (25) faisant saillie radialement vers l'extérieur, et dans lesquels sont maintenus les tirants (13).

5. Dispositif d'actionnement selon les revendications 2 et 4, caractérisé en ce qu'au moins sur la première coupelle de ressort (9), deux flancs latéraux en regard l'un de l'autre, de deux yeux (25), sont réalisés sous forme de surfaces de guidage (27) assurant un arrêt en rotation, et à chacune desquelles est opposée une surface de guidage fixe (29), s'étendant parallèlement à la direction axiale (11) de la broche filetée (6).

6. Dispositif d'actionnement selon la revendication 5, caractérisé en ce que les surfaces de guidage fixes (29) sont agencées à au moins une glissière de guidage (28) supportée par un bâti (4) du dispositif d'actionnement.

7. Dispositif d'actionnement selon l'une ou plusieurs des revendications précédentes, caractérisé en ce que la butée (14, 15) est agencée radialement A l'extérieur du ressort de pression (10), de manière axialement réglable (vis 26).

8. Dispositif d'actionnement selon l'une ou plusieurs des revendications précédentes, caractérisé en ce que le balancier (17) est d'une configuration à double-joues (joues 17a, 17b), la broche filetée (6) ou le tronçon d'arbre (7) non fileté, traversant l'espace intermédiaire entre les deux joues (17a, 17b) du balancier (17).

9. Dispositif d'actionnement selon l'une ou plusieurs des revendications précédentes, caractérisé en ce qu'à chacune des extrémités du balancier (17) est articulée une pièce intermédiaire (30), qui est reliée de manière réglable, au moyen d'un tendeur (32), à l'âme (19) de l'un des câbles sous gaine du type Bowden (21).
